Europäisches Patentamt

European Patent Office

Office européen des brevets

(11) Veröffentlichungsnummer: **0 183 126**
**A1**

(12) **EUROPÄISCHE PATENTANMELDUNG**

(21) Anmeldenummer: 85114358.6

(22) Anmeldetag: 12.11.85

(51) Int. Cl.⁴: **B 65 G 69/28**

(30) Priorität: 27.11.84 DE 3443127

(43) Veröffentlichungstag der Anmeldung:
04.06.86 Patentblatt 86/23

(84) Benannte Vertragsstaaten:
AT BE CH DE FR GB IT LI LU NL SE

(71) Anmelder: Alten, Kurt
Ringstrasse 14
D-3015 Wennigsen(DE)

(72) Erfinder: Alten, Kurt
Ringstrasse 14
D-3015 Wennigsen(DE)

(74) Vertreter: Depmeyer, Lothar
Auf der Höchte 30
D-3008 Garbsen 1(DE)

(54) Überladebrücke für Rampen.

(57) Die Erfindung geht aus von Überladebrücken für Rampen mit einer an ihrem rampenseitigen Ende um eine waagrechte Achse (5) an der Rampe (4) verschwenkbar gelagerten Brückenplatte (1) zur Auflage auf dem zu be-bzw. entladenden Fahrzeug (8) mit ihrem freien Ende. Um die Brückenplatte (1) in einfacher Weise montieren bzw. demontieren zu können, ohne dazu Verrichtungen an dem Schwenklager der Brückenplatte (1) vollziehen zu müssen, liegt aufgrund der Erfindung die Achse (5) der Brückenplatte (1) frei auf dem Lager (12)(abhebbar) auf, wenn sich die Brückenplatte (1) in von ihrer Gebrauchsstellung abweichenden Schwenkstellungen befindet. In den Betriebsstellungen der Brückenplatte 81) hingegen unterfaßt diese mit einem Sperriegel (15) ein festes Widerlager (16), von dem der Sperriegel (15) jedoch freikommt, wenn die vorerwähnten Montagestellungen der Brückenplatte (1) erreicht werden.

Fig. 4

EP 0 183 126 A1

Kurt Alten in 3o15 Wennigsen

## Überladebrücke für Rampen

Die Erfindung betrifft eine Überladebrücke mit einer an ihrem rampenseitigen Ende um eine waagerechte Achse an der Rampe verschwenkbar gelagerten Brückenplatte zur Auflage auf der zu be- bzw. entladenden Plattform mit ihrem freien Ende.

Bei den bekannten Überladebrücken steht die zum Verschwenken der Brückenplatte dienende Achse seitlich geringfügig über; sie überragt also die Brückenplatte beiseitig. Dabei befinden sich die so gebildeten Achsstummel in üblichen Lagerstellen, die eine Fertigmontage nach dem Einsetzen der Brückenplatte erforderlich machen.

Der Erfindung liegt im wesentlichen die Aufgabe zugrunde, die obigen Brücken so zu verbessern, dass die Brückenplatte in die Rampe eingesetzt werden kann, ohne nach dem Einsetzen eine Lagermontage durchführen zu müssen. Demgemäss strebt die Erfindung eine Vereinfachung der Montage der Überladebrücke an, ohne dabei jedoch befürchten zu müssen, dass nach der Montage der Brückenplatte ungewollte Lageveränderungen der Brückenplatte eintreten können.

- 2 -

Zur Lösung dieser Aufgabe liegt erfindungsgemäss die Achse der Brückenplatte in von den Betriebsstellungen der Brückenplatte abweichenden Schwenkstellungen frei abhebbar auf ihrer Lagerstelle auf, zudem ist die Brückenplatte mit einem Sperriegel versehen, der in den Betriebsstellungen der Brückenplatte ein festes Widerlager hinterfasst und in den von den Betriebsstellungen abweichenden Schwenkstellungen der Brückenplatte sich ausserhalb des Wirkungsbereiches des Widerlagers befindet.

Bei einer so ausgeführten Überladebrücke wird die Brückenplatte auf die Lagerstelle aufgesetzt, wenn sie eine von ihrer Betriebsstellung abweichende Stellung innehat. Durch Verschwenken der Brückenplatte in ihre Normalstellung wird der Sperriegel wirksam bzw. so mit der Brückenplatte bewegt, dass er das feste Widerlager hinterfasst, womit die Brückenplatte gegen ungewolltes Abheben abgesichert ist.

Bei einer so ausgeführten Lagerstelle können alle Vorbereitungen und Anordnungen getroffen werden, bevor eine Montage der Brückenplatte stattfindet. Auch während oder nach der Montage der Brückenplatte erübrigen sich Massnahmen zur Lagerung und Sicherung der Brückenplatte. Im Regelfalle ist die Brückenplatte auch von einem Hubzylinder unterstützt, wobei es sich versteht, dass der Hubzylinder einerseits mit dem Fundament und andererseits mit der Brückenplatte verbunden wird. Auch diese Verbindung trägt dazu bei, dass übergrosse Schwenkstellungen eintreten können, in denen ein Abheben der Brückenplatte von ihrer Lagerstelle stattfinden könnte.

Weitere Einzelheiten der Erfindung werden anhand der Zeichnung erläutert, in der ein Ausführungsbeispiel der Erfindung dargestellt ist.

Es zeigen :

Fig. 1 eine in Betrieb befindliche Überladebrücke für
       Rampen in der Betriebsstellung,

Fig. 2 eine Teildraufsicht auf die Brücken gemäss
       Fig. 1,

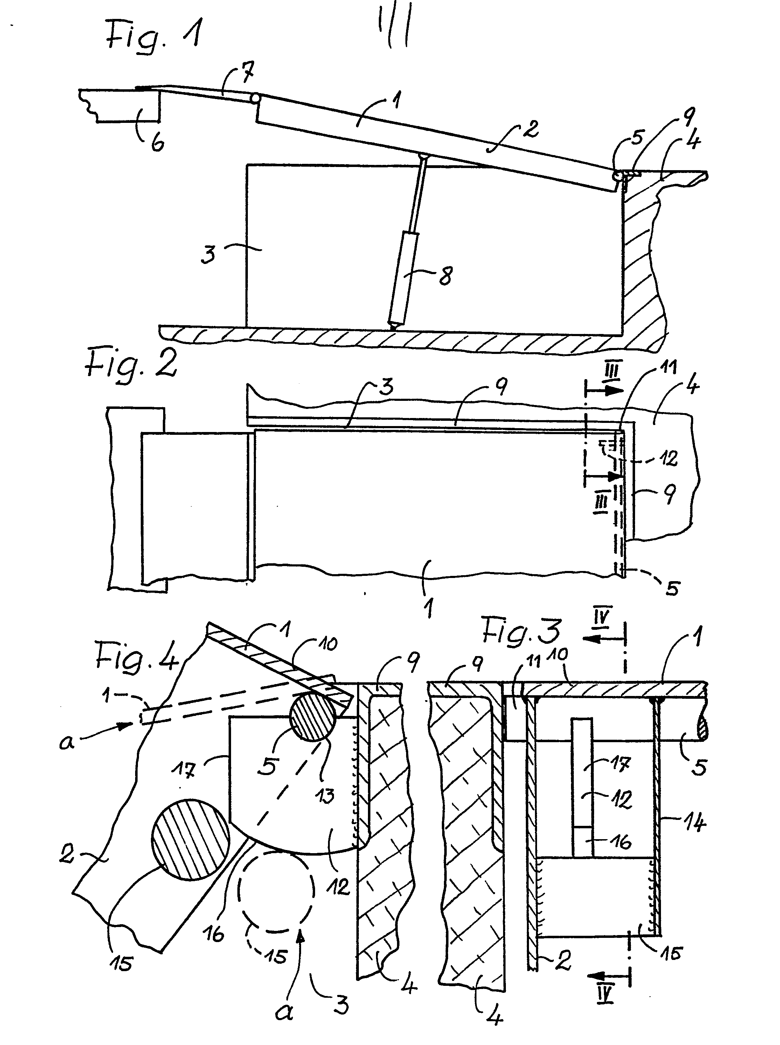

Fig. 3 einen Schnitt nach der Linie III - III von Fig. 2 und

Fig. 4 einen Schnitt nach der Linie IV - IV von Fig. 3.

Die Brückenplatte 1 mit Seitenblechen 2 befindet sich in
einer ihrer Grösse entsprechenden Ausnehmung 3 der Rampe 4,
an der sie mit ihrem hinteren, rampenseitigen Ende über
eine quer verlaufende Achse 5 angelenkt ist, damit sie
sich an unterschiedlich hohe Plattformen 6 von Fahrzeugen
anpassen kann, auf denen sich die Brückenplatte 1 über
ihre angelenkte Verlängerung 7 abstützt.

In der Ruhelage stützt sich die Brückenplatte 1 auf
nicht dargestellte Anschläge ab; dabei schliesst sie
oben mit der Rampenoberfläche ab. Im übrigen ist die
Brückenplatte 1 noch von einem Hubzylinder 8 unterstützt,
mit dem die Brückenplatte 1 nach oben verschwenkt werden kann.

Der obere Rand der Ausnehmung 3 wird von einem Winkeleisen 9 eingefasst, das auch an der schwenkbaren Lagerung
der Brückenplatte 1 beteiligt ist.

Die Achse 5 ist unter dem Rand des Deckbleches 1o der
Brückenplatte 1 befestigt und überragt mit kurzen Stummeln 11
die Seitenbleche 2. Diese Stummel 11 enden kurz vor den
Winkeleisen 9. Damit wird die Brückenplatte 1 gegen seitliche Verlagerungen gesichert und so innerhalb der Ausnehmung 3 zentriert. Zum Inneren hin neben den Seitenblechen 2 sind am senkrechten Schenkel der Winkeleisen 9 Konsolen 12 angeschweisst, die sich in Brückenlängsrichtung erstrecken und oben mit einer halbkreisförmigen Ausnehmung 13 zur Aufnahme der Achse 5 aufweisen. Die Konsolen 12 dienen somit als Träger zur Aufnahme der senkrechten Last; die Seitenzentrierung erfolgt - wie erwähnt - durch die Stirnflächen der Stummel 11.

In beiden Randbereichen hat die Brückenplatte 1 noch ein Halteblech 14, das sich parallel zum Seitenblech 2 erstreckt, und zwar nach unten, um so eine Halterung zu bilden für einen waagerechten Sperriegel 15, der an beiden Enden mit den angrenzenden Blechen 2, 14 verschweisst ist.

Der untere Rand der Konsolen 12 verläuft nach einem Kreisbogen 16, dessen Radius durch den Abstand des Sperriegels 15 vom Zentrum der Achse 5 bestimmt ist. Der freie Rand der Konsolen 12 verläuft im wesentlichen senkrecht; er ist mit 17 bezeichnet. Die Konsolen 12 haben nun eine solche Länge, dass in allen möglichen Betriebsstellungen der Brückenplatte 1 der Sperriegel 15 dem Kreisbogen 16 gegenüberliegt bzw. in allen diesen Stellungen - z.B. bei a - der Sperriegel 15 durch die Konsole 12 an einer Bewegung nach oben gehindert wird, womit ausgeschlossen wird, dass dabei die Achse 5 aus ihrer Ausnehmung 13 herausgehoben werden kann. Damit ist also für den Betrieb der Überladebrücke die Sicherung der Lagerstelle der Brückenplatte 1 gegeben.

Um die Brückenplatte 1 montieren bzw. mit ihrer Achse 5 in die Ausnehmung 13 einsetzen zu können, wird die Brückenplatte 1 in eine Steilstellung gebracht ( vgl. Darstellung gemäss Fig. 4 ), die wesentlich grösser ist als die während des Brückenbetriebes gewünschte grösste/Steil- oder Schrägstellung. In dieser Steilstellung befindet

**0183126**

sich der Sperriegel 15 ausserhalb des Bereichs des Kreisbogens 16 bzw. - in der Draufsicht gesehen - vor der Konsole 12. Damit kann die Brückenplatte 1 nach unten abgesenkt bzw. zu einer evtl. Demontage angehoben werden, ohne durch die Konsole 12 behindert zu werden. Die Verriegelung durch die Konsolen 12 erfolgt dann durch Verschwenken der Brückenplatte 1 in den Schwenkbereich, der durch den Kreisbogen 16 bestimmt ist. In diesen sog. Betriebsstellungen der Brückenplatte 1 ist diese auch mit dem Hubzylinder 8 verbunden, der ungewollte Verschwenkbewegungen der Brückenplatte 1 infolge seiner begrenzten Länge ausschliesst. Auch unbegfugte Verschwenkungen der Brückenplatte 1 in eine Steilstellung gemäss Fig. 4 sind ohne weiteres nicht möglich.

Ansprüche

1. Überladebrücke für Rampen mit einer an ihrem rampenseitigen Ende um eine waagerechte Achse an der Rampe verschwenkbar gelagerten Brückenplatte zur Auflage auf der zu be- bzw. entladenden Plattform mit ihrem freien Ende, wobei die Brückenplatte mit ihrer Achse auf einem an der Rampe fest angeordneten Lager aufliegt, dadurch gekennzeichnet, dass die Achse (5) der Brückenplatte (1) in von ihren Betriebsstellungen abweichenden Lagen frei abhebbar auf ihrer Lagerstelle (12,13) aufliegt und dass die Brückenplatte mit einem Sperriegel (15) versehen ist, der in den Betriebsstellungen der Brückenplatte ein festes Widerlager (12) hinterfasst und in den von den Betriebsstellungen abweichenden Lagen sich ausserhalb des Wirkungsbereiches des Widerlagers befindet.

2. Überladebrücke nach Anspruch 1, dadurch gekennzeichnet, dass die frei über die Brückenplatte (1) seitlich herausragenden Enden der Achse (5) die Brückenplatte innerhalb der Ausnehmung (3) der Rampe zentrieren und gegen seitliche Verschiebungen sichern.

3. Überladebrücke nach Anspruch 1 und 2, dadurch gekennzeichnet, dass die Stirnflächen der Enden den die Ausnehmung (3) bestimmenden Seitenwänden benachbart liegen.

4. Überladebrücke nach Anspruch 1, dadurch gekennzeichnet, dass das Lager von einer in die Ausnehmung (3) hineinragenden Konsole (12) gebildet ist, die oben eine etwa halbkreisförmige Ausnehmung (13) zum Einlegen der Achse (5) aufweist und an ihrem unteren Rand einen Kreisbogen beschreibt, dessen Radius durch die Achse bestimmt ist und in den Betriebsstellungen der Brückenplatte (1)
dem Sperriegel (15) benachbart liegt.

5. Überladebrücke nach Anspruch 1, dadurch gekennzeichnet,
dass sich der Sperriegel (15) parallel zur Achse (5)
erstreckt.

6. Überladebrücke nach Anspruch 1, dadurch gekennzeichnet,
dass der Sperriegel (15) mit einem Seitenblech der Brückenplatte (1) fest verbunden ist.

7. Überladebrücke nach Anspruch 6, dadurch gekennzeichnet,
dass der Sperriegel mit seinen einen Ende an dem  Seitenblech und mit seinem anderen Ende an einem parallel zum
Seitenblech verlaufenden Halteblech befestigt ist und
sich die die Lagerstelle ( 12 ) zwischen diesen Blechen
befindet.

8. Überladebrücke nach Anspruch 1, dadurch gekennzeichnet,
dass die Brückenplatte in einer Steilstellung ( Schrägstellung ) von ihrer Lagerstelle abhebbar bzw. auf diese
Lagerstelle aufsetzbar ist, bei der sie von der Rampe aus
gesehen schräg nach oben gerichtet ist und eine Lage einnimmt,
die steiler ist als die steilste Stellung, die der Brückenbetrieb zulässt.

9. Überladebrücke nach Anspruch 1, dadurch gekennzeichnet,
dass die steilste Betriebsstellung durch den Hubzylinder (8)
für die Brückenplatte (1) sicherbar ist.

Fig. 1

Fig. 2

Fig. 3

Fig. 4

**0183126**

**Europäisches**
**Patentamt**

## EUROPÄISCHER RECHERCHENBERICHT

| | EINSCHLÄGIGE DOKUMENTE | | EP 85114358.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
| X | DE - A1 - 2 549 715 (TREPEL AG)<br>* Gesamt; insbesondere Fig. 1 *<br>---- | 1,4,5,8 | B 65 G 69/28 |
| | | | **RECHERCHIERTE SACHGEBIETE (Int Cl 4)**<br><br>B 65 G |

Der vorliegende Recherchenbericht wurde für alle Patentansprüche erstellt.

| Recherchenort | Abschlußdatum der Recherche | Prufer |
|---|---|---|
| WIEN | 03-03-1986 | PISSENBERGER |